(19) Europäisches Patentamt
European Patent Office
Office européen des brevets

(11) Publication number: **0 562 191 A2**

# (12) EUROPEAN PATENT APPLICATION

(21) Application number: **92307537.8**

(22) Date of filing: **18.08.92**

(51) Int. Cl.$^5$: **C09D 163/00**, C08G 59/38, C08J 7/04

(30) Priority: **27.03.92 JP 70934/92**

(43) Date of publication of application: **29.09.93 Bulletin 93/39**

(84) Designated Contracting States: **DE FR GB IT SE**

(71) Applicant: **TAKATA CORPORATION**
**4-30, Roppongi 1-chome**
**Minato-ku, Tokyo(JP)**
Applicant: **STT Inc.**
**84, Nase-cho, Totsuka-ku**
**Yokahama-shi, Kanagawa 245(JP)**

(72) Inventor: **Sugasawa, Takamasa**
**1-8-9 Minamikamonomiya**
**Odawara-shi, Kanagawa(JP)**
Inventor: **Hirokawa, Yoshiyuki**
**2700-40 Hinatsu-cho**
**Hikone-shi, Shiga(JP)**
Inventor: **Shimada, Masahito**
**503-4 Chigasaki**
**Chigasaki-shi, Kanagawa(JP)**

(74) Representative: **Goddard, David John et al**
**Dibb Lupton Broomhead, Carlton House, 18 Albert Square**
**Manchester M2 5PG (GB)**

## (54) Surface coating member.

(57) Surface coating member comprises a coating layer thereon containing a solid lubricant and a resin matrix, and additionally a reinforcing material if necessary. The resin matrix is a mixed resin containing (a) bisphenol A-type epoxy resin and/or the modified product thereof; and (b) diglycidyl ester of long-chain dibasic acid.

EP 0 562 191 A2

## FIELD OF THE INVENTION

The present invention relates to a surface coating member, namely a member which has a coating layer on the surface thereof. More particularly, it relates to a surface coating member prepared by applying lubricating coating to the surface of a rubber or plastic member such as wiper blade, seal packing, O-ring, weather strip, glass run, timing belt, rubber bellows, gear and door catcher. The present invention relates to a surface coating member suitable as a surface-coated sliding member, such as wiper blade, glass run, weather strip and O-ring, whose surface slides in contact with other members.

## DESCRIPTION OF THE RELATED ART

Molding products from natural or synthetic rubbers have been employed conventionally for wiper blade rubber. However, this type of wiper blade rubber is not satisfactory due to the following drawbacks.

The occurrence of adhering phenomenon between such wiper blade rubber and glass surface during a semi-drying or cold season induces so-called "locking phenomenon" in which the operation of the wiper blade is blocked, or so-called "trembling phenomenon", namely, self-exciting vibration due to the negative characteristics of the velocity dependency of the frictional coefficient. These cause problems such as (1) unsatisfactory wiping, (2) abnormal abrasion on the surface of the blade rubber, (3) shorter lifetime of each of the connection portions of the wiper system, (4) increase in the consumption power for the operation motor and (5) eyesore and grafting due to the trembling phenomenon.

For overcoming such problems, Japanese Patent Unexamined Publication No. Sho.55-15873 proposes to coat the rubber surface of a wiper blade with a silicone composition containing molybdenum disulfide.

In the wiper blade having such coating as described in the above-mentioned patent publication, however, it has been found that the durability of the coating layer becomes poor. This is the case with weather strip or glass run.

Furthermore, the following drawbacks are also suggested between metal surface and rubber material. Thus, the coating layer do not always have a satisfactory property.

That is, in an oil seal or gasoline cap seal, sticking phenomenon develops between the rubber and the metal surface, increasing torque upon the opening and closure thereof. There occurs abnormal abrasion, stick slip or generation of ringing in an O-ring, packing or timing belt or the like, owing to the high sliding resistance between the rubber and the metal surface. Also, puncture occurs due to the abnormal abrasion in rubber bellows. Additionally, abnormal abrasion, ringing or creaking occurs in a gear or door catcher made of polyacetal, nylon resin, etc.

In order to overcome these foregoing problems, some countermeasure such as grease coating is now on application. Nevertheless, it has been found that this measure cannot provide satisfactory durability.

## OBJECT AND SUMMARY OF THE INVENTION

It is the object of the present invention to overcome the foregoing problems and provide a surface coating member having excellent sliding property along with high durability of the coating layer.

The surface coating member in accordance with a first aspect of the present invention is a surface coating member wherein a coating layer containing a solid lubricant and a resin matrix is formed on the surface, the resin matrix being a mixed resin containing the following components (a) and (b);

(a) bisphenol A-type epoxy resin and/or the modified product thereof; and

(b) diglycidyl ester of long-chain dibasic acid.

The surface coating member in accordance with a second aspect of the present invention is a surface coating member wherein a coating layer containing a solid lubricant, a resin matrix and a reinforcing material, is formed on the surface, the resin matrix being a mixed resin containing the following components (a) and (b);

(a) bisphenol A-type epoxy resin and/or the modified product thereof; and

(b) diglycidyl ester of long-chain dibasic acid.

The coating layer of the surface coating member of the present invention has flexibility and toughness sufficiently applicable to extremely soft materials such as soft rubber, soft vinyl chloride and the like.

The coating layer formed has excellent properties including enhanced flexibility, impact resistance, adhesive property to oily surface and the like, because it contains diglycidyl ester of long-chain dibasic acid as the resin matrix, without losing the functions such as high adhesive property, weathering property, chemical resistance, abrasive resistance as the characteristic properties of the bisphenol A-type epoxy resin and the modified product thereof as the resin matrix. Glycidyl ester of long-chain dibasic acid has the effect

of modification to decrease the abrasion coefficient, without deteriorating such excellent properties of bisphenol A-type epoxy resin and/or the modified product thereof. Thus, the resin matrix of the present invention having stronger adhesive property with materials, is useful as a resin matrix for solid-lubricant coating. The resin matrix of the present invention has excellent sliding property particularly for the abrasive friction when the partner member for sliding is frosted glass or for the friction in the presence of oil.

BRIEF DESCRIPTION OF THE DRAWINGS

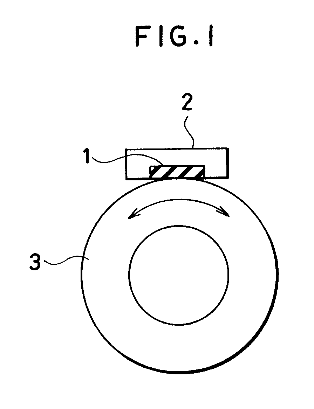

Fig.1 is a schematic side view explaining the experimental procedures in Examples and Comparative Examples.

DESCRIPTION OF THE PREFERRED EMBODIMENTS

Not any specific limitation is imposed on the rubber or plastic constituting the main body portion of the surface coating member according to the present invention. Thus, a variety of rubbers and plastics can be employed therefor. The rubber may be either natural or synthetic rubber. Illustrative examples of such synthetic rubbers include styrene butadiene rubber, butadiene rubber, isoprene rubber, ethylene propylene rubber (EPM, EPDM), acrylonitrile butadiene rubber, chloroprene rubber, isobutylene isoprene rubber, alfin rubber, polyether rubber, polysulfide rubber, silicone rubber, acrylic rubber, fluoro rubber, halogenated polyethylene rubber, urethane rubber, ethylene vinyl acetate rubber, high styrene rubber and acrylonitrile isoprene rubber. Among them, preference is given to EPDM, in particular.

The plastic may be either a thermosetting resin or a thermoplastic resin.

Illustrative examples of such plastic include ABS resin, ABS blend, acetal resin (homopolymer), acrylic resin, ACS resin, alkyd resin, amino resin, ASA resin, cellulose type resin, chlorinated polyether, diallyl phthalate resin, epoxy resin, ethylene-vinyl acetate copolymer, fluoro resin, ionomer, methyl pentene polymer, phenol resin, polyamide (nylon), polyallyl ether, polyallyl sulfone, polybutene-1, polycarbonate, unsaturated polyester resin, polyethylene, polyethylene terephthalate (tetron), polyimide, polyamide-imide, polyphenylene oxide, polyphenylene sulfide, polypropylene, polystyrene, polysulfone, polyether sulfone, polyurethane, vinyl chloride resin, polyallylate and the like.

The coating layer to coat the rubber or the plastic comprises a solid lubricant, a resin matrix, and additionally a reinforcing member if necessary.

As the resin matrix, it is used a mixed resin containing the following components (a) and (b);

(a) bisphenol A-type epoxy resin and/or the modified product thereof; and

(b) diglycidyl ester of long-chain dibasic acid.

In accordance with the present invention, the ratio of the components (a) and (b) is preferably 20 to 80 parts by weight of the component (a) to 80 to 20 parts by weight of the component (b). If the component (a) is at less than 20 parts by weight and the component (b) is above 80 parts by weight, there occurs the deterioration of the excellent properties of the component (a); if the component (a) is above 80 parts by weight and the component (b) is at less than 20 parts by weight, the effect of the modification through the blending of the component (b) cannot satisfactorily be obtained. Specifically preferable such compounding ratio is 40 to 60 parts by weight of the component (a) to 60 to 40 parts by weight of the component (b).

The modified product of the component (a) bisphenol A-type epoxy resin includes modified urethane, modified rubber, modified silicone and the like. The long-chain dibasic acid constituting the component (b) diglycidyl ester of long-chain dibasic acid includes those shown as follows;

a. "ST-2PG", manufactured by Okamura Seiyu, Co. Ltd.;

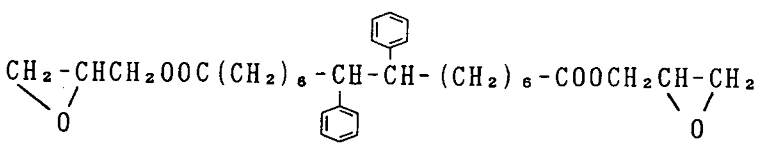

b. "SB-20G", manufactured by Okamura Seiyu, Co. Ltd.;

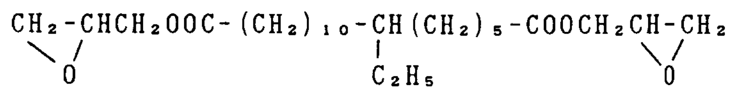

c. "IPU-22G", manufactured by Okamura Seiyu, Co. Ltd.;

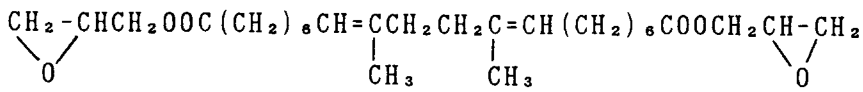

As the solid lubricant, there can be used for example, sulfide such as molybdenum disulfide and tungsten disulfide, fluoride such as polytetrafluoroethylene (PTFE) and fluorinated graphite, graphite and silicone powder. Such solid lubricants described above each may be used alone or in combination with two or more of them. In accordance with the present invention, the combination of PTFE, graphite and silicone powder is preferably used because of the properties of the individual solid lubricants;

1. PTFE microfine powder

The use of a lower-molecular PTFE microfine powder with a higher crystallinity improves the lubrication durability of the coating layer. Furthermore, the PTFE microfine powder has greater stability in dispersion because of the form in an approximately spherical particle.

2. Silicone powder

Because of the stable sliding property of silicone powder to glass, it is observed that the friction coefficient and frictional weight of the coating layer are decreased. Silicone powder serves to compensate the defect of the poor initial drape of PTFE.

3. Graphite

Graphite serves to compensate the defect of the poor initial drape of PTFE and functions as black pigment. If added too much, the resulting product may wear and form powder.

In this case, the blending ratio is preferably 100 to 4,500 parts by weight of PTFE and 100 to 1,500 parts by weight of silicone powder to 100 parts by weight of graphite.

Such solid lubricant is the one having a mean diameter preferably of 10 $\mu$m or less, more preferably of 5,$\mu$m or less, most preferably of 3 $\mu$m or less.

The blending ratio of a solid lubricant and the resin matrix is preferably 60 to 5 parts by weight of the resin matrix to 40 to 95 parts by weight of a solid lubricant; specifically preferably 60 to 50 parts by weight of the resin matrix to 40 to 50 parts by weight of a solid lubricant.

If a reinforcing material is to be blended, the blending ratio of a solid lubricant, the resin matrix and a reinforcing material is preferably 39.9 to 80 parts by weight, 60 to 5 parts by weight and 0.1 to 15 parts by weight, respectively; specifically preferably, 37 to 45 parts by weight, 60 to 50 parts by weight, and 3 to 5 parts by weight, respectively.

As such reinforcing material, there may be used carbon black and/or fibrous filler. Of these reinforcing materials, carbon black not only reinforces the coating layer but also serves as black pigment. Fibrous (or whisker) filler has the effect to depress the wearing of polytetrafluoroethylene, silicon powder and the like as solid lubricants, thereby improving the wear resistance and strength of the coating layer. As the fibrous filler, there may be used silicon carbide fiber, carbon fiber, glass fiber, alumina fiber, potassium titanate fiber and the like. Such fiber has a fiber length of 5 to 100 $\mu$m and a fiber diameter of 0.3 to 5.0 $\mu$m.

In accordance with the present invention so as to arrange the coating layer on the surface of rubber or plastic, there may be dispersed or dissolved in an organic solvent the solid lubricant, the resin matrix, a reinforcing material and a curing agent, if necessary, a curing promoting agent if necessary, a curing catalyst for improving toughness, and other additives such as lubricating agent, levelling agent, silicone oil and the like, prior to coating.

Specific additives are illustrated, for example, in the following;

[I] 2,4,6-Tris(dimethylaminomethyl)phenol

Manufactured by WAKO Chemicals, Co. Ltd.; curing promoting agent.

[II] 2-Ethyl-4 methylimidazole

Manufactured by Shikoku Kasei Industry, Co. Ltd.; curing catalyst (for increasing toughness).

[III] X-22-165B

Manufactured by Shin-etsu Chemical Industry, Co. Ltd.; reactive silicone oil (phenol-modified) lubricating agent, levelling , reactive.

As additives, the above additives [I], [II] and [III] are preferably added at 0.1 to 1, 0.1 to 1, and 0.4 to 5 parts by weight, respectively, to 100 parts by weight of the matrix resin.

As the curing agent, there may be used aliphatic amine, aromatic amine, alicyclic amine, polyamide amine, heterocyclic amine, polyoxypropylene amine, dicyane diamide, and acid anhydrides. Among them, preference is given to polyamide amine and heterocyclic amine, in particular. The amount of a curing agent to be used is preferably 10 to 50 parts by weight to 100 parts by weight of the resin.

As the organic solvent, preferable are methyl ethyl ketone, toluene, xylene, isopropyl alcohol, isobutanol, n-butanol, butyl acetate, methyl isobutyl ketone, cellosolve acetate and the like.

As the coating method, various methods may be employed including brush coating, spraying, dipping and the like. Prior to the coating, rubber or plastic is subjected to surface washing or surface processing, in order to improve the drape with the resin matrix. Such surface processing includes, for example, primer processing.

As has been described above, the surface coating member of the present invention gives the coated surface an extremely lower friction coefficient, and the resulting coating layer has a far greater durability.

In accordance with the present invention, the surface coating member as such can be used very effectively as a surface coating member prepared by applying lubricating coating to the surface of a rubber or plastic member, such as wiper blade, seal packing, O-ring, weather strip, glass run, timing belt, rubber bellows, gear and door catcher; specifically, the coating member can be used as a surface coating member suitable as a surface-coated sliding member, such as wiper blade, glass run, weather strip and O-ring, whose surface slides in contact with other members.

The present invention will now be explained in Examples and Comparative Examples hereinbelow.

By spraying the compositions shown in Comparative Examples 1 to 4 and Examples 1 to 11 onto the surface of rubber pieces, and curing the compositions under the curing (heating) conditions individually shown, coating layers of a thickness of 10 $\mu$m were formed on the surface of the rubber pieces. The rubber pieces were cut into a size of 10 mm x 6 mm x 2 mm for use as test pieces. The coating layer was formed on the area of 10 mm x 6 mm of each of the test pieces.

The test pieces were mounted on a FALEX No.1 tester (manufactured by Faville-Levally Corporation) to test the durability of the coating layers.

Fig. 1 shows a schematic side view depicting the testing condition, wherein test piece 1 held with test piece holder 2 is pressed, under the load of 9.06 kg (20 LBS), toward the outer circumference of ring 3 of a diameter of 35 mm. The material of the outer circumference of the ring 3 is SAE 4620 steel, having a surface roughness of 6 to 12 rms. The ring 3 was oscillated at a frequency of 100 cycle/min, within a rotational range of 90° around the axial center, as shown by the arrow.

The number of cycles until the friction coefficient reached 0.2 was measured as a lifetime cycle. If the coating layer was worn out so the rubber layer was exposed before the friction coefficient reached 0.2, the number of cycle up to the point was counted as the lifetime cycle.

The lifetime cycles of Comparative Examples and Examples each are shown in Tables 1 and 2. The static and dynamic friction coefficients of each of test pieces prior to the initiation of the sliding motion with the ring 3, were measured. The results are shown also in Tables 1 and 2.

Tables 1 and 2 clearly indicate that, the test pieces of the Examples 1 to 11 of the present invention have lower friction coefficients and much higher durability of the coating layers.

All of the mean particle sizes of the solid lubricants used hereinafter are 5 $\mu$m or less.

By the term "part" is meant "part by weight" hereinbelow.

Comparative Example 1

| | |
|---|---|
| Polyurethane resin ("Nipporan 5185" manufactured by Nippon Urethane Industry, Co. Ltd.)<br>Isocyanate curing agent (Coronate HL) | 100 parts<br>10.0 parts |
| Curing condition; 80 °C for 30 minutes | |

Comparative Example 2

| | |
|---|---|
| Polyurethane resin ("Nipporan 5185" manufactured by Nippon Urethane Industry, Co. Ltd.)<br>Molybdenum disulfide (manufactured by Climax Molybdenum, Co. Ltd.; technical grade)<br>Polytetrafluoroethylene ("Lubron L-5" manufactured by Daikin Industry, Co. Ltd.)<br>Graphite ("ACP 1000" manufactured by Nippon Graphite Industry, Co. Ltd.)<br>Isocyanate curing agent (Coronate HL) | 26.0 parts<br>30.0 parts<br>42.0 parts<br>2.0 parts<br>2.6 parts |
| Curing condition; 80 °C for 30 minutes | |

Comparative example 3 (corresponding to Example 3 of Japanese Patent Unexamined Publication No. Sho. 55-15873)

| | |
|---|---|
| Emulsion with 20% silicone content ("KM-765" manufactured by Juetsu Chemicals, Co. Ltd.) Catalyst ("C-PM-4F" manufactured by Juetsu Chemicals, Co. Ltd.)<br>Molybdenum disulfide (mean particle size of 4.5 µm)<br>Water | 45 parts 4.5 parts<br>4.0 parts<br>52.0 parts |
| Curing condition; After left to stand at room temperature for 10 minutes followed by curing at 150 °C for 10 minutes, a cured layer was obtained. | |

Comparative Example 4

| | |
|---|---|
| Fluoro-olefin vinyl ether-vinyl ester copolymer ("Fluonate K702" manufactured by Dai-Nippon Ink Chemical Industry, Co. Ltd.)<br>Isocyanate curing agent ("Barnock DN980" manufactured by Dai-Nippon Ink Chemical Industry, Co. Ltd.) | 100 parts<br>24 parts |
| Curing condition; 80 °C for 10 minutes | |

Example 1

| Principal agent | |
|---|---|
| Bisphenol A-type epoxy resin ("Epicoat 828" manufactured by Yuka Shell, Co. Ltd.) | 25.0 parts |
| Diglycidyl ester of long-chain dibasic acid ("IPU-22G" manufactured by Okamura Seiyu, Co. Ltd.) | 25.0 parts |
| Polytetrafluoroethylene ("KTL-8N" manufactured by Kitamura, Co. LTd.) | 39.3 parts |
| Silicone rubber ("KMP-594" manufactured by Shin-Etsu Chemical Industry, Co. Ltd.) | 8.3 parts |
| Graphite (ACP-3000" manufactured by Nippon Graphite Industry, Co. Ltd.) | 2.4 parts |

| Curing agent | |
|---|---|
| Heterocyclic amine ("Epomate B-002" manufactured by Yuka Shell, Co. Ltd. ) | 19.0 parts |

| Additives | |
|---|---|
| Curing promoting agent ("2,4,6-tris(dimethylaminomethyl)phenol" manufactured by WAKO Chemicals, Co. Ltd.) | 0.5 part |
| Curing condition; 120 °C for 30 minutes | |

Example 2

| Principal agent | |
|---|---|
| Bisphenol A-type epoxy resin ("Epicoat 828" manufactured by Yuka Shell,Co. Ltd.) | 24.0 parts |
| Diglycidyl ester of long-chain dibasic acid ("ST-2PG" manufactured by Okamura Seiyu, Co. Ltd.) | 36.0 parts |
| Polytetrafluoroethylene ("KTL-8N" manufactured by Kitamura, Co. LTd.) | 32.4 parts |
| Silicone rubber ("KMP-594" manufactured by Shin-Etsu Chemical Industry, Co. Ltd.) | 6.8 parts |
| Graphite (ACP-3000" manufactured by Nippon Graphite Industry, Co. Ltd.) | 0.8 parts |

| Curing agent | |
|---|---|
| Heterocyclic amine ("Epomate B-002" manufactured by Yuka Shell, Co. Ltd.)<br>Curing promoting agent ("2,4,6-tris(dimethylamino methyl)phenol" manufactured by WAKO Chemicals, Co. Ltd.) | 19.2 parts<br>0.6 part |
| Curing condition; 120 °C for 30 minutes | |

Example 3

| Principal agent | |
|---|---|
| Polyurethane-modified bisphenol A-type epoxy resin ("X-1522" manufactured by ACR Co. Ltd.) | 24.0 parts |
| Diglycidyl ester of long-chain dibasic acid ("ST-2PG" manufactured by Okamura Seiyu, Co. Ltd.) | 36.0 parts |
| Polytetrafluoroethylene ("KTL-8N" manufactured by Kitamura, Co. LTd.) | 30.8 parts |
| Silicone rubber ("KMP-594" manufactured by Shin-Etsu Chemical Industry, Co. Ltd.) | 6.8 parts |
| Graphite ("ACP-3000" manufactured by Nippon Graphite Industry, Co. Ltd.) | 2.4 parts |

| Curing agent | |
|---|---|
| Polyamide amine ("H-260" manufactured by ACR Co. Ltd.) | 39.0 parts |

| Additives | |
|---|---|
| Silicone oil ("X-22-165B" manufactured by Shin-etsu Chemical Industry, Co. Ltd.) | 0.5 part |
| Curing condition; 120 °C for 30 minutes | |

Example 4

| Principal agent | |
|---|---|
| Polyurethane-modified bisphenol A-type epoxy resin ("X-1522" manufactured by ACR Co. Ltd.) | 36.0 parts |
| Diglycidyl ester of long-chain dibasic acid ("IPU-22G" manufactured by Okamura Seiyu, Co. Ltd.) | 12.0 parts |
| Diglycidyl ester of long-chain dibasic acid ("ST-2PG" manufactured by Okamura Seiyu, Co. Ltd.) | 12.0 parts |
| Polytetrafluoroethylene ("KTL-8N" manufactured by Kitamura, Co. LTd.) | 30.3 parts |
| Silicone rubber ("KMP-594" manufactured by Shin-Etsu Chemical Industry, Co. Ltd.) | 6.9 parts |
| Graphite ("ACP-3000" manufactured by Nippon Graphite | 2.0 parts |
| Carbon black ("Laven 1255" manufactured by Columbian Carbon Japan, Co. Ltd.) | 0.8 parts |

| Curing agent | |
|---|---|
| Polyamide amine ("H-260" manufactured by ACR Co. Ltd. ) | 42.0 parts |

| Additives | |
|---|---|
| Silicone oil ("X-22-165B" manufactured by Shin-etsu Chemical Industry, Co. Ltd.) | 0.6 part |
| Curing condition; 120 °C for 30 minutes | |

Example 5

| Principal agent | |
|---|---|
| Polyurethane-modified bisphenol A-type epoxy resin ("X-1522" manufactured by ACR Co. Ltd.) | 32.4 parts |
| Diglycidyl ester of long-chain dibasic acid ("IPU-22G" manufactured by Okamura Seiyu, Co. Ltd.) | 10.8 parts |
| Diglycidyl ester of long-chain dibasic acid ("ST-2PG" manufactured by Okamura Seiyu, Co. Ltd.) | 10.8 parts |
| Polytetrafluoroethylene ("KTL-8N" manufactured by Kitamura, Co. LTd.) | 34.8 parts |
| Silicone rubber ("KMP-594" manufactured by Shin-Etsu Chemical Industry, Co. Ltd.) | 8.3 parts |
| Graphite ("ACP-3000" manufactured by Nippon Graphite Industry, Co. Ltd.) | 2.3 parts |
| Carbon black ("Laven 1255" manufactured by Columbian Carbon Japan, Co. Ltd.) | 0.6 parts |

| Curing agent | |
|---|---|
| Polyamide amine ("H-260" manufactured by ACR Co. Ltd. ) | 38.0 parts |

| Additives | |
|---|---|
| Silicone oil ("X-22-165B" manufactured by Shin-etsu Chemical Industry, Co. Ltd.) | 0.5 part |
| Curing condition; 120 °C for 30 minutes | |

Example 6

| Principal agent | |
|---|---|
| Bisphenol A-type epoxy resin ("Epicoat 828" manufactured by Yuka Shell, Co. LTd.) | 25.0 parts |
| Diglycidyl ester of long-chain dibasic acid ("IPU-22G" manufactured by Okamura Seiyu, Co. Ltd.) | 25.0 parts |
| Polytetrafluoroethylene ("KTL-8N" manufactured by Kitamura, Co. LTd.) | 37.5 parts |
| Silicone rubber ("KMP-594" manufactured by Shin-Etsu Chemical Industry, Co. Ltd.) | 7.3 parts |
| Graphite ("ACP-3000" manufactured by Nippon Graphite Industry, Co. Ltd.) | 4.0 parts |
| Silicon carbide whisker ("TWS-100" manufactured by Tokai Carbon , Co. Ltd.) | 1.2 parts |

| Curing agent | |
|---|---|
| Heterocyclic amine ("Epomate B-002" manufactured by Yuka Shell, Co. Ltd. ) | 19.0 parts |

| Additives | |
|---|---|
| Curing catalyst ("2-ethyl-4-methylimidazole" manufactured by Shikoku Kasei Industry, Co. Ltd.) | 0.5 part |
| Silicone oil ("X-22-165B" manufactured by Shin-etsu Chemical Industry, Co. Ltd.) | 0.5 part |
| Curing condition; 120 °C for 30 minutes | |

Example 7

| Principal agent | |
|---|---|
| Bisphenol A-type epoxy resin ("Epicoat 828" manufactured by Yuka Shell Co. Ltd.) | 30.0 parts |
| Diglycidyl ester of long-chain dibasic acid ("IPU-22G" manufactured by Okamura Seiyu, Co. Ltd.) | 15.0 parts |
| Diglycidyl ester of long-chain dibasic acid ("ST-2PG" manufactured by Okamura Seiyu, Co. Ltd.) | 15.0 parts |
| Polytetrafluoroethylene ("KTL-8N" manufactured by Kitamura, Co. LTd.) | 27.9 parts |
| Silicone rubber ("KMP-594" manufactured by Shin-Etsu Chemical Industry, Co. Ltd.) | 5.6 parts |
| Graphite ("ACP-3000" manufactured by Nippon Graphite Industry, Co. Ltd.) | 3.7 parts |
| Calcium methasilicate ("NYAD-G" manufactured by Nagase Sangyo, Co. Ltd.) | 2.8 parts |

| Curing agent | |
|---|---|
| Heterocyclic amine ("Epomate B-002" manufactured by Yuka Shell Co. Ltd. ) | 21.0 parts |

| Additives | |
|---|---|
| Curing catalyst ("2-ethyl-4 methylimidazole" manufactured by Shikoku Kasei, Co. Ltd.)<br>Silicone oil ("X-22-165B" manufactured by Shin-etsu Chemical Industry, Co. Ltd.) | 0.5 part<br>0.5 part |
| Curing condition; 120 °C for 30 minutes | |

Example 8

| Principal agent | |
|---|---|
| Polyurethane-modified bisphenol A-type epoxy resin ("X-1522" manufactured by ACR Co. Ltd.) | 36.0 parts |
| Diglycidyl ester of long-chain dibasic acid ("IPU-22G" manufactured by Okamura Seiyu, Co. Ltd.) | 12.0 parts |
| Diglycidyl ester of long-chain dibasic acid ("ST-2PG" manufactured by Okamura Seiyu, Co. Ltd.) | 12.0 parts |
| Polytetrafluoroethylene ("KTL-8N" manufactured by Kitamura, Co. LTd.) | 28.5 parts |
| Silicone rubber ("KMP-594" manufactured by Shin-Etsu Chemical Industry, Co. Ltd.) | 6.5 parts |
| Graphite ("ACP-3000" manufactured by Nippon Graphite Industry, Co. Ltd.) | 2.0 parts |
| Potassium titanate fiber ("Tismo D" manufactured by Otsuka Chemicals, Co. Ltd.) | 3.0 parts |

| Curing agent | |
|---|---|
| Polyamide amine ("H-260" manufactured by ACR Co. Ltd. ) | 42.0 parts |

| Additives | |
|---|---|
| Silicone oil ("X-22-165B" manufactured by Shin-etsu Chemical Industry, Co. Ltd.) | 0.6 part |
| Curing condition; 120 °C for 30 minutes | |

Example 9

| Principal agent | |
|---|---|
| Polyurethane-modified bisphenol A-type epoxy resin ("X-1522" manufactured by ACR Co. Ltd.) | 32.4 parts |
| Diglycidyl ester of long-chain dibasic acid ("IPU-22G" manufactured by Okamura Seiyu, Co. Ltd.) | 21.6 parts |
| Polytetrafluoroethylene ("KTL-8N" manufactured by Kitamura, Co. LTd.) | 30.8 parts |
| Silicone rubber ("KMP-594" manufactured by Shin-Etsu Chemical Industry, Co. Ltd.) | 8.3 parts |
| Graphite ("ACP-3000" manufactured by Nippon Graphite Industry, Co. Ltd.) | 2.3 parts |
| Aluminium borate ("Alborex G" manufactured by Shikoku Kasei, Co. Ltd.) | 4.6 parts |

| Curing agent | |
|---|---|
| Polyamide amine ("H-260" manufactured by ACR Co. Ltd. ) | 39.0 parts |

| Additives | |
|---|---|
| Silicone oil ("X-22-165B" manufactured by Shin-etsu Chemical Industry, Co. Ltd.) | 0.5 part |
| Curing condition; 120 °C for 30 minutes | |

Example 10

| Principal agent | |
|---|---|
| Polyurethane-modified bisphenol A-type epoxy resin ("X-1522" manufactured by ACR Co. Ltd.) | 32.4 parts |
| Diglycidyl ester of long-chain dibasic acid ("IPU-22G" manufactured by Okamura Seiyu, Co. Ltd.) | 21.6 parts |
| Polytetrafluoroethylene ("KTL-8N" manufactured by Kitamura, Co. LTd.) | 30.8 parts |
| Silicone rubber ("KMP-594" manufactured by Shin-Etsu Chemical Industry, Co. Ltd.) | 8.3 parts |
| Graphite ("ACP-3000" manufactured by Nippon Graphite Industry, Co. Ltd.) | 2.3 parts |
| Carbon fiber ("Kureca Chop C" manufactured by Kureha Chemical Industry, Co. Ltd.) | 4.6 parts |

| Curing agent | |
|---|---|
| Polyamide amine ("H-260" manufactured by ACR Co. Ltd. ) | 39.0 parts |

| Additives | |
|---|---|
| Silicone oil ("X-22-165B" manufactured by Shin-etsu Chemical Industry, Co. Ltd.) | 0.5 part |
| Curing condition; 120 °C for 30 minutes | |

Table 1

| Comparative Examples | 1 | 2 | 3 | 4 |
|---|---|---|---|---|
| Static friction coefficient ($\mu_0$) | 0.7 | 0.25 | 0.13 | 0.23 |
| Dynamic friction coefficient ($\mu$) | 0.5 | 0.35 | 0.18 | 0.38 |
| Durable lifetime (sliding number) | 10 | 200 | 1000 | 100 |

Table 2

| Examples | 1 | 2 | 3 | 4 | 5 | 6 | 7 | 8 | 9 | 10 |
|---|---|---|---|---|---|---|---|---|---|---|
| Static friction coefficient ($\mu_0$) | 0.09 | 0.10 | 0.10 | 0.10 | 0.10 | 0.12 | 0.12 | 0.11 | 0.11 | 0.11 |
| Dynamic friction coefficient ($\mu$) | 0.14 | 0.19 | 0.16 | 0.19 | 0.18 | 0.20 | 0.20 | 0.19 | 0.19 | 0.19 |
| Durable lifetime (sliding number) | 40000 | 42000 | 48000 | 56000 | 60000 | 90000 | 95000 | 98000 | 100000 | 120000 |

## Claims

**1.** Surface coating member comprising a coating layer formed on the surface, said layer consisting of a solid lubricant and a resin matrix,

the resin matrix being a mixed resin containing the following components (a) and (b);
(a) bisphenol A-type epoxy resin and/or the modified product thereof; and
(b) diglycidyl ester of long-chain dibasic acid.

**2.** Surface coating member comprising a coating layer formed on the surface,
said layer consisting of a solid lubricant, a resin matrix and a reinforcing material,
the resin matrix being a mixed resin containing the following components (a) and (b);
(a) bisphenol A-type epoxy resin and/or the modified product thereof; and
(b) diglycidyl ester of long-chain dibasic acid.

**3.** The surface coating member claimed in claim 1 or claim 2 ratio of the components (a) and (b) is 20 to 80 parts by weight of the component (a) to 80 to 20 parts by weight of the component (b).

**4.** The surface coating member claimed in claim 1 or claim 2 wherein the solid lubricant comprises at least one selected from the group consisting of sulfide, fluoride, graphite and silicone powder.

**5.** The surface-coating sliding member claimed in claim 1 or claim 2 wherein the solid lubricant comprises polytetrafluoroethylene, graphite and silicone powder.

**6.** The surface coating member claimed in claim 5 wherein the solid lubricant comprises 100 parts by weight of graphite, 100 to 4,500 parts by weight of polytetrafluoroethylene and 100 to 1,500 parts by weight of silicone powder.

**7.** The surface coating member claimed in claim 1, wherein the compounding ratio of the solid lubricant and the resin matrix is 40 to 95 parts by weight of the solid lubricant and 60 to 5 parts by weight of the resin matrix.

**8.** The surface coating member claimed in claim 7 wherein the compounding ratio of the solid lubricant and the resin matrix is 40 to 50 parts by weight of the solid lubricant and 60 to 50 parts by weight of the resin matrix.

**9.** The surface coating member claimed in claim 1 or claim 2 wherein the mean particle size of the solid lubricant is 10 $\mu$m or less.

**10.** the surface coating member claimed in claim 9 wherein the mean particle size of the solid lubricant is 5 $\mu$m or less.

**11.** The surface coating member claimed in claim 1 or claim 2 wherein the surface coating member is a wiper blade rubber.

**12.** The surface coating member claimed in claim 1 or claim 2 wherein the surface coating member is a seal packing.

**13.** The surface coating member claimed in claim 2 wherein the reinforcing material is carbon black and/or fibrous filler.

**14.** The surface coating member claimed in claim 13 wherein the fibrous filler is one or two or more selected from the group consisting of carbon fiber, glass fiber, silicon carbide fiber, alumina fiber and potassium titanate fiber.

**15.** The surface coating member claim in claim 2 wherein the compounding ratio of the solid lubricant, the resin matrix and the reinforcing material is 39.9 to 80 parts by weight of the solid lubricant, 60 to 5 parts by weight of the resin matrix and 0.1 to 15 parts by weight of the reinforcing material.

**16.** The surface coating member claimed in claim 15 wherein the compounding ratio of the solid lubricant, the resin matrix and the reinforcing material is 37 to 45 parts by weight of the solid lubricant, 60 to 50 parts by weight of the resin matrix and 3 to 5 parts by weight of the reinforcing material.

FIG.1